Europäisches Patentamt

European Patent Office

Office européen des brevets

(19)

(11) Publication number: **0 395 254**
**A2**

(12) **EUROPEAN PATENT APPLICATION**

(21) Application number: **90303845.3**

(22) Date of filing: **10.04.90**

(51) Int. Cl.⁵: **G01N 1/12**

(30) Priority: **28.04.89 GB 8909810**

(43) Date of publication of application:
**31.10.90 Bulletin  90/44**

(84) Designated Contracting States:
**AT BE DE ES FR GB GR IT LU NL SE**

(71) Applicant: **DAVY MCKEE (STOCKTON)**
**LIMITED**
**Ashmore House**
**Stockton-on-Tees Cleveland TS18 3RE(GB)**

(72) Inventor: **Hemming, Charles Mark**
**8 The Green, Eaglescliffe**
**Stockton-on-Tees, TS16 9DB(GB)**
Inventor: **Barlow, John**
**25 Coatham Vale, Eaglescliffe**
**Stockton-on-Tees, TS16 0RA(GB)**

(74) Representative: **Kirk, Geoffrey Thomas et al**
**BATCHELLOR, KIRK & CO. 2 Pear Tree Court**
**Farringdon Road**
**London EC1R 0DS(GB)**

(54) **Apparatus for probing material in a vessel in a steel production plant.**

(57) An apparatus for probing material in a vessel in a steel production plant consists of a support structure (9) having a pivot mounted arm (11) which mounts an elongate support member (10). The support member (10) is of arcuate shape and has an extensible part (15) adapted to mount a probe. In use the retractable part (15) and the probe is retracted into an outer part of the support member (10) and moved through an arcuate path ('P') by the rotation of the arm (11) to be inserted into the vessel (1) through an opening (5) in the top. The probe is extended, a sample taken, and the probe retracted followed by displacement of the support member out of the vessel (1) along path ('P').

Because the support member is arcuate, is displaced through an arcuate path, and has an extensible part, the problem of providing space for the apparatus is alleviated.

FIG.1

The present invention is concerned with apparatus for probing material in a vessel in a steel production plant in order to assess the condition of the material and to take samples of the material. In such production plants the steel is produced in the vessel from raw materials including iron and (in the case of stainless steel production) chromium.

Conventionally apparatus for probing material in a vessel comprises an elongate, linear, inextensible support member for mounting a probe. The support member, at least during use, is mounted on a support structure adapted to move the support member along a linear path. Thus, when a probe is mounted on the support member the probe is displaced along the linear path between a first position, outside the vessel, and a second position, within the vessel, whereby the material in the vessel can be probed.

Because of the length of the support member and the length of the path, apparatus of the conventional type occupies a great amount of space. Furthermore, because the support member must be introduced to the vessel through an aperture in the top of the vessel the space occupied by the apparatus is substantially above the vessel. This is very inconvenient.

It is an object of the present invention to provide apparatus for probing material in a vessel in a steel production plant which alleviates the aforementioned technical problem experienced with conventional apparatus while still enabling the probe to reach deeply into the vessel.

Accordingly there is provided apparatus for probing material in a vessel in a steel production plant comprising:
an elongate support member for mounting a probe, the support member being mounted on a support structure adapted to move the support member such that when a probe is mounted on the support member the probe can be displaced between a first position, outside the vessel, and a second position, within the vessel, whereby material in the vessel can be probed, characterised in that; the support structure and the support member are adapted to displace the probe, when mounted on the support member, along an arcuate path between the first and second positions; and, the support member is comprised of first and second parts, said second part being adapted to mount the probe and to be extensible from the first part to probe the material deep in the vessel, and retractable into the first part for movement along the arcuate path.

In a steel production plant of the present type the vessel is mounted on pivots to be pivotable about a horizontal axis. The horizontal axis generally passes through the vessel in a plane substantially above the equator of the vessel. The pivots are usually mounted on a carriage which is in turn supported on a track.

The present apparatus can conveniently be mounted for use at a position substantially adjacent to the vessel and in the equatorial plane of the vessel. In a preferred form of the apparatus it is mounted on a trolley which can then travel on the same track as the vessel for movement to and from the adjacent position.

To use the apparatus it is first necessary to mount the probe and to do this the first part of the support member is extended. The first part is then retracted and the support member positioned in the first position. The support structure is then actuated to move the support member through the path so that it enters the vessel.

Although it is contemplated that the support member may be substantially straight, an undesirably large degree of extensibility may be required in order to avoid the support member fouling on the surrounding plant or the vessel as it moves through the path. Furthermore it would be difficult to arrange the apparatus so that the probe reaches into the vessel substantially on the vertical axis of the vessel. In consequence it is preferred that the support member be of substantially arcuate shape (possibly made up of inclined straight sections). This enables the volume swept by the support member to be kept small and avoids the support member fouling on the vessel or surrounding plant.

The depth to which the support member can reach in the vessel is limited by the relative positions of the apparatus, the vessel and the surrounding plant. Generally this depth is not satisfactory for probing the material, and in consequence it is necessary to extend the first member thereby projecting the probe to a greater depth in the material.

Once the samples have been taken by the probe it is retracted and the support member withdrawn through the arcuate path to the first position at which the first member can be extended to gain access to the probe in order to exchange the probe or remove samples from the probe for analysis.

The apparatus thus avoids any need to adapt the plant by the provision of space for substantially vertical and longitudinal insertion and removal of the probe.

It is also unnecessary to incline the vessel to enable insertion and removal of the probe and consequently the processing times are reduced while increasing the working life of the plant.

An embodiment of an apparatus for probing material in a vessel in a steel production plant will now be described, by way of example only with reference to the accompanying drawings; in which,

Figure 1 is a side view of the apparatus incorporated in a steel making plant, with the support member in the first position and the first part extended,

Figure 2. is a side view of the apparatus with the support member in the first position but with the first part retracted,

Figure 3. is a side view of the apparatus with the member in the second position and the first part extended,

Figure 4. is a plan view of the apparatus of figure 3.

The drawings show a steel production plant consisting of a refractory vessel 1 containing the molten materials used in the production of steel.

The vessel 1 is pivotably mounted on an axis above the equatorial plane of the vessel 1 by way of trunnions 2. The trunnions are mounted on a carriage 3 which is in turn supported on a track 4. Thus the vessel 1 can be removed to another part of the plant and tilted to enable the contents to be drained through an opening 5 provided in the frusto-conically shaped top of the vessel 1.

The vessel 1, is situated with the opening 5 vertically below an extraction chimney 6 so that fumes expelled from the opening 5 during the process are safely exhausted from the plant.

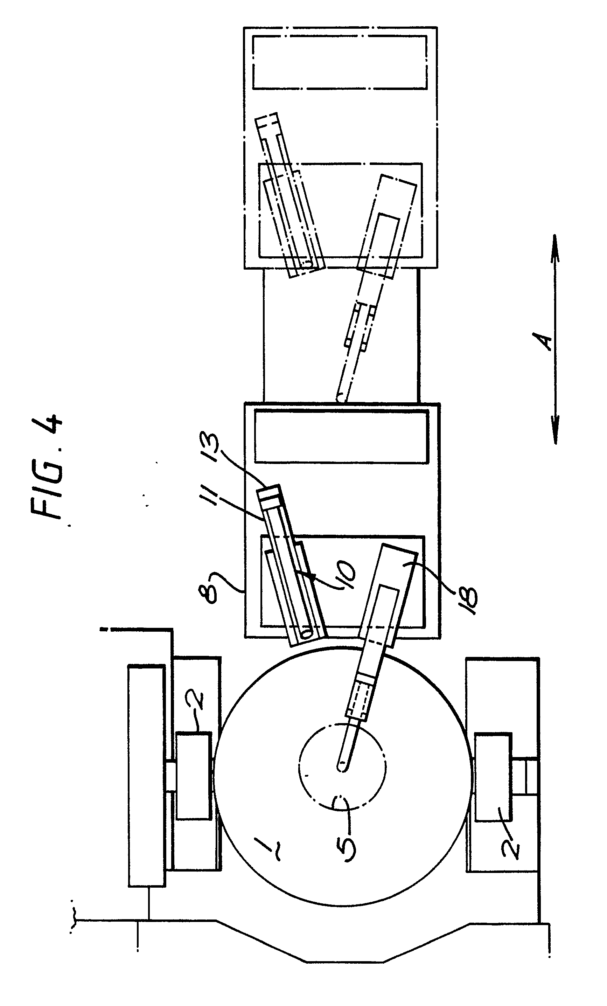

The apparatus for probing the material in the vessel 1 (generally indicated by numeral 7) is mounted on a trolley 8 which is in turn mounted for travel on the track 4 as indicated by arrow A in figure 4.

The apparatus consists of a support structure generally indicated by numeral 9, on which is mounted a support member generally indicated by numeral 10.

The support structure has a rigid arm 11 mounted at one end on the trolley 8 by a pivot 12. The other end of the arm 11 is provided with a mounting 13 which engages the support member 10. A drive means such as an hydraulic ram (not shown) acts between the arm 11 and the trolley to reversibly rotate the arm 11 about the pivot 12.

The support member 10 has an elongate tubular outer part 14, which is engaged at one end by the mounting 13, to extend away from the arm 11 in a direction substantially at a normal to a radius of a notional circle having the pivot 12 as its centre. An elongate tubular inner part 15, of the member 10 is telescopically received into an end 16 of the outer part 14 remote from the mounting 13, for extension and retraction from the outer part 14. The free end or the inner part 15 is adapted for mounting various types of probes including sampling, temperature, oxygen, hydrogen and slag sampling probes in various combinations. In the present embodiment extension and retraction of the inner part 15 is achieved by actuation of an hydraulic ram (not shown).

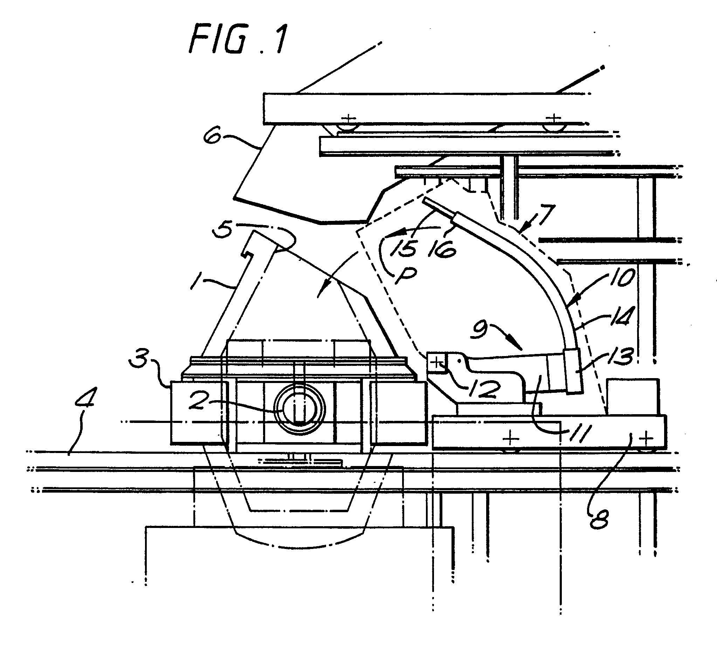

In use the inner part 15 is first extended as shown in figure 1 and a probe attached thereto.

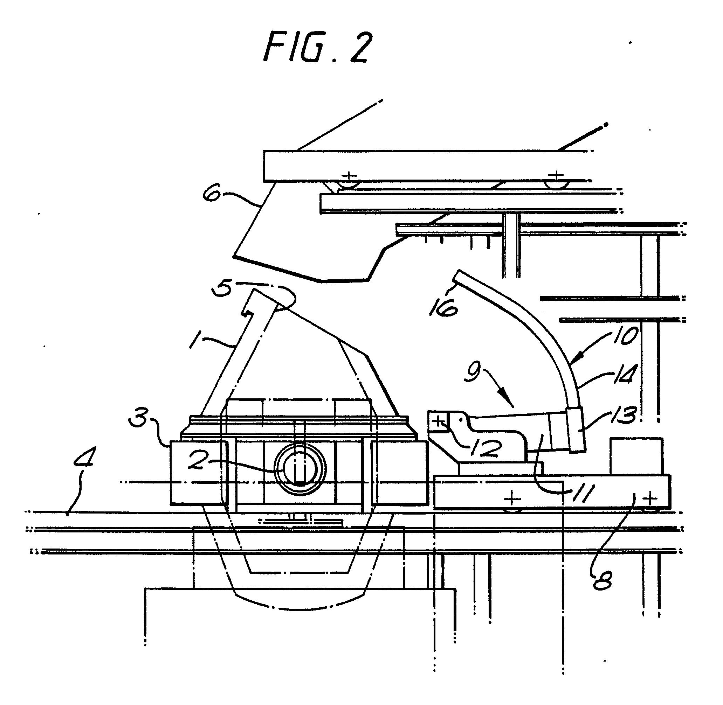

Conveniently this could be achieved with the trolley moved away from the vessel 1 and the arm 11, rotated to bring the adapter to a readily accessible location near the level of the track 4. Once the probe is attached the support member 10 is rotated by the support structure 11, to the first position shown in figure 1, with the probe raised above the height of the vessel opening 5. At this stage the inner part 15 may be retracted into the outer part 14 as shown in figure 2. The apparatus is moved by the trolley 8 to the position next to the vessel 1.

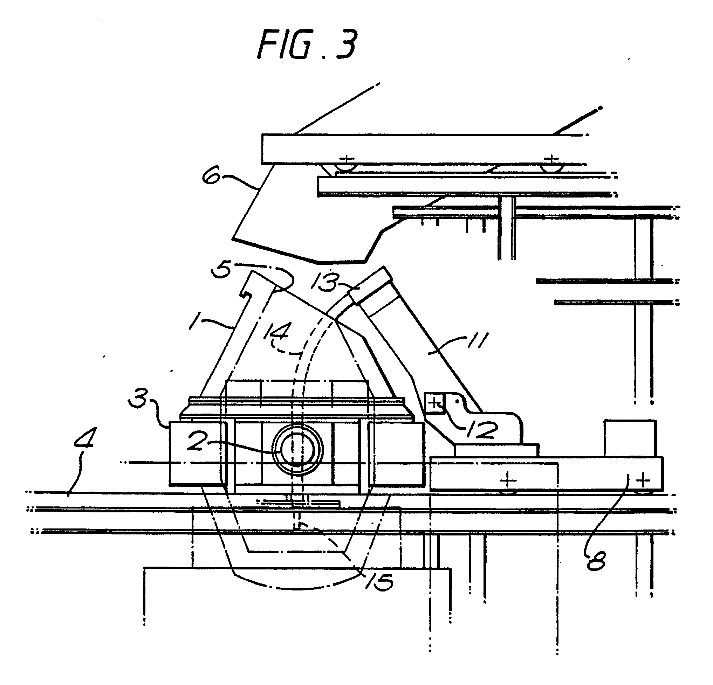

The hydraulic ram is then actuated to rotate the arm 11 and hence move the support member 10 through an arcuate path indicated by arrows P so that the probe is moved through the opening 5 into the vessel 1. At the maximum rotation of the arm 11, which is constrained by the proximity of the vessel side wall, the probe only reaches to about half the depth of the vessel 1. In order to probe deep into the base of the vessel 1 the inner part 15 is then extended to the second position as shown in figure 3. Once the sample and any other probing operations have been completed the inner part 15 is retracted into the outer part 14 and rotation of the arm 11 reversed to remove the probe from the vessel 1 along the arcuate path 'P' to return it to the first position. The inner part 15 is then extended to enable access to the probe and the withdrawal of any sample.

It will be realised from the description above that by retracting the inner part 15 the volume swept by the passage of the member 10 along the path P is reduced in comparison with an inextensible support member. Further reduction of the swept volume is achieved in the described embodiment by making the support member 10 of substantially arcuate shape. This feature also enables the probe to reach the central axis of the vessel 1 without extension of the inner part 15 so that the length of the outer part 14 can be maximised without fouling on the side walls of the vessel 1. The outer part 14 is of greater diameter and hence stronger than the inner part 15 can be made and in this embodiment is provided with a coolant passage (not shown) whereby fluid coolant can be circulated within the outer part 14 thereby improving the durability of the apparatus.

When retracted the probe and inner part 15 are surrounded by a protective fairing. This prevents material adhering to the probe from dripping on the surroundings as it is being removed.

Provision to purge the inside surfaces of the outer part 14 with a gas, for example argon, can be made in order to alleviate the problem of material adhering to inside surfaces of the outer part 14.

The embodiment of the apparatus described is mounted on a trolley together with an oxygen lance 17 used to inject oxygen during the process. However, the apparatus 7 may be mounted alone on the trolley 8 or fixed mounted on other parts of the surrounding plant.

In an alternative embodiment of the apparatus the support structure could comprise a rigid arm with an arcuate support member slidably displaceably mounted thereon to move through the arcuate path.

## Claims

1. Apparatus for probing material in a vessel (1) in a steel production plant comprising: an elongate support member (10) for mounting a probe, the support member (10) being mounted on a support structure (8, 11, 12, 13) adapted to move the support member such that when a probe is mounted on the support member (10) the probe can be displaced between a first position, outside the vessel (1), and a second position, within the vessel (1), whereby material in the vessel (1) can be probed, characterised in that; the support structure (8, 11, 12, 13) and the support member (10) are adapted to displace the probe, when mounted on the support member, along an arcuate path between the first and second positions; and, the support member (10) is comprised of first and second parts (14, 15), said second part (15) being adapted to mount the probe and to be extensible from the first part (14) to probe the material deep in the vessel, and retractable into the first part for movement along the arcuate path.

2. Apparatus according to claim 1 wherein the second part (15) and a probe are received into a fairing on retraction.

3. Apparatus according to claim 1 or claim 2 wherein the first part (14) is provided with a coolant passage for the circulation of coolant.

4. Apparatus according to any one of the preceding claims wherein the support member (10) is of substantially arcuate configuration.

5. Apparatus according to any one of the preceding claims wherein the support structure (8, 11, 12, 13) includes a pivotally mounted arm (11), said support member (10) being mounted on the arm (11) to be displaced along the arcuate path when a drive means pivots the arm (11).

6. Apparatus according to claim 4, wherein the support structure includes a fixed mounted arm, said arcuate support member (10) being slidably mounted in guide means provided on said arm, whereby, sliding displacement of the arcuate support member (10) through the guide means causes the arcuate support member (10) to follow the arcuate path.

7. Apparatus according to any one of the preceding claims wherein the support member (10) is provided with means to purge the interior surface thereof.

8. Apparatus according to any one of the preceding claims adapted to be mounted on a trolley (8).

FIG .1

# FIG. 2

FIG.3

FIG. 4